# EUROPEAN PATENT APPLICATION

(11) **EP 4 198 105 A1**
(43) Date of publication of application: **21.06.2023**
(21) Application number: 21215315.9
(22) Date of filing: 16.12.2021
(51) Int. Cl.: C09K 11/78, C09K 11/80, C01F 17/20, C01F 17/34

(54) **MICROJET REACTOR BASED SYNTHESIS OF NANOPHOSPHORS**

(71) Applicant: Seaborough IP I B.V., 1098 XG Amsterdam (NL)
(72) Inventor: BERENDS, Anne Claire, 3551 TJ Utrecht (NL); VAN DE HAAR, Marie Anne, 1381 HL WEESP (NL); WERNER, Jan, 56075 Koblenz (DE); Kratz, Nadja, 56179 Vallendar (DE); Vetter, Stefan, 56203 Höhr-Grenzhausen (DE); Nickel, Alena, 50672 Köln (DE); Volk, Caroline, 56321 Brey (DE)
(74) Representative: Hoyng Rokh Monegier B.V.

(57) **Abstract**

There is provided a method of making luminescent nanoparticles of the type A₂₋ₓO₃:Lnₓ, wherein A is one or more of yttrium, scandium, aluminium, gallium, or a lanthanide; Ln is at least one lanthanide; and 0<x<2, said method comprising: - providing a first mixture comprising at least a salt of A, a salt of Ln, and a solvent, - providing a second mixture comprising a precipitating agent and a solvent, - contacting said first mixture with said second mixture in a microjet reactor process to obtain a third mixture comprising nanoparticles, and-subjecting said nanoparticles to a heating step. There is also provided compositions and applications comprising the nanoparticles obtainable by the method.

## Description

### FIELD OF THE INVENTION

The invention provides nanophosphor materials synthesis methods using a microjet reactor and compositions comprising nanophosphors synthesized using a microjet reactor.

### BACKGROUND OF THE INVENTION

Luminescent down-conversion materials, or phosphors, play an important role in solid-state lighting devices for illumination and display applications, among others. For some applications it is desired that these phosphors have particle sizes in the nanoregime.

The microjet reactor is a device suitable for the production of nanomaterials, and includes all the geometries described in EP 1 165224 B1 and DE 102009008478 A1.

WO2011116763 and US9,901,893 B2 disclose methods to obtain nanoparticles using a microjet reactor. However, these methods are aimed for pharmaceutical particles which are generally organic materials.

Inorganics 2014, 2, 1-15; doi:10.3390/inorganics2010001 describes the synthesis of different inorganic oxide materials using a precipitation method with a microjet reactor.

Ceramic Applications 4 (2016) [2] and Keram. Z. 69 (2017) [6] disclose the synthesis of luminescent YVO₄:RE and YAG materials. However, the final materials were not nanosized.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET.

It is desirable to have methods to produce luminescent nanomaterials in a reproducible manner at a large scale.

### SUMMARY OF THE INVENTION

According to the invention there is provided a method of making luminescent nanoparticles of the type A₂₋ₓO₃:Lnₓ, wherein A is one or more of yttrium, scandium, gallium, aluminium, or a lanthanide; Ln is at least one lanthanide; and 0<x<2, said method comprising:
- providing a first mixture comprising at least a salt of A, a salt of Ln, and a solvent,
- providing a second mixture comprising a precipitating agent and a solvent,
- contacting said first mixture with said second mixture in a microjet reactor process to obtain a third mixture comprising nanoparticles, and
- subjecting said nanoparticles to a heating step.

According to the invention there is provided nanoparticles obtainable by the methods of the invention.

According to the invention there is further provided a luminescent composition comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises the nanoparticles according to the invention.

The method of the invention allows to obtain highly crystalline luminescent nanoparticles in an efficient and reproducible manner. The method allows to obtain nanoparticles with a high quantum yield.

The nanoparticles of the invention show good absorption/emission properties and are suited for mixing in luminescent compositions. They have few crystal defects and are highly crystalline at small sizes. They can advantageously be used in compositions, wherein non-radiative energy transfer (sometimes also referred to as Fluorescent Resonance Energy Transfer, FRET) is desired.

### DETAILED DESCRIPTION OF THE INVENTION

### Nanoparticles

The nanoparticles according to the invention are luminescent nanoparticles of the type A₂₋ₓO₃:Lnₓ, wherein A is one or more of yttrium, scandium, aluminium, gallium, or a lanthanide; Ln is at least one lanthanide; and 0<x<2.

The annotation ":Ln" means that the material is doped with Ln. The doping ions are present at the sites where A would reside.

A can be a lanthanide, Ln is at least one lanthanide. The lanthanide or at least one lanthanide is chosen from the lanthanide series, i.e. the elements with atomic numbers 57-71. Preferably, if A comprises a lanthanide, the lanthanide is chosen from the group of lutetium, or gadolinium. Preferably, Ln is at least one of europium, terbium or cerium in a trivalent oxidation state. Eu³⁺ shows, upon suitable excitation, red-emission. Ce³⁺ shows, when embedded in a suitable garnet host lattice such as Y₃Al₅O₁₂ ("YAG"), strong blue absorption and upon suitable excitation a broad yellow-green emission band. Tb³⁺ shows, upon suitable excitation, yellow-green emission.

Preferably, the doping concentration is at least 10% for europium doped nanoparticles, more preferably the doping concentration is between 15% and 80%. As used herein, the doping concentration is the percentage of doping ions relative to the total of doping ions and A atoms in the crystal lattice.

Preferably, the doping concentration is at least 0.1% for cerium doped nanoparticles, more preferably, the doping concentration is between 1 and 3%.

Preferably, the doping concentration is at least 15% for terbium doped nanoparticles, more preferably, the doping concentration is between 20% and 80%.

Preferably, in the case of nanoparticles co-doped with both europium and terbium, the doping concentration of europium is between 15% and 50%, and the doping concentration of terbium is at least 15%.

Preferably, in the case of nanoparticles co-doped with both cerium and terbium, the doping concentration of cerium is between 0.1% and 3%, and the doping concentration of terbium is at least 15%.

In a preferred embodiment, A comprises yttrium. This type is also known as Y₂O₃:Ln, or yttrium oxide.

In a preferred embodiment, A comprises scandium. This type is also known as Sc₂O₃:Ln, or scandium oxide.

In a preferred embodiment, A comprises aluminium. This type is also known as Al₂O₃:Ln, or aluminium oxide.

In a preferred embodiment, A comprises gallium. This type is also known as Ga₂O₃:Ln, or gallium oxide.

In a preferred embodiment, A comprises lutetium. This type is also known as Lu₂O₃:Ln, or lutetium oxide.

In a preferred embodiment, A comprises gadolinium. This type is also known as Gd₂O₃:Ln, or gadolinium oxide.

Preferably, the nanoparticles of the invention are of the type Al₃A2₅O₁₂:Ln, wherein A1 is one or more selected from the group of yttrium, lutetium, or gadolinium; A2 is one or more selected from the group of aluminium, gallium, or scandium; and Ln is at least one lanthanide.

The nanoparticles of the invention thus may comprise Y₃Al₅O₁₂:Ln (YAG:Ln), Lu₃Al₅O₁₂:Ln (LuAG:Ln), (Yₓ,Lu(₁₋ₓ))₃Al₅O₁₂:Ln ((Lu,Y)AG:Ln),

(Yₓ,Lu₍₁₋ₓ))₃(Al_{1-y}Ga_{y})₅O₁₂:Ln, (Yₓ,Lu₍₁₋ₓ₎)₃(Al_{1-y}Sc_{y})₅O₁₂:Ln, (Yₓ,Lu₍₁₋ₓ))₃(Sc_{1-y}Ga_{y})₅O₁₂:Ln, (Yₓ,Gd₍₁₋ₓ₎)₃(Al_{1-y}Ga_{y})₅O₁₂:Ln, (Yₓ,Gd₍₁₋ₓ₎)₃(Al_{1-y}Sc_{y})₅O₁₂:Ln, (Yₓ,Gd₍₁₋ₓ₎)₃(Sc_{1-y}Ga_{y})₅O₁₂:Ln, (Luₓ,Gd₍₁₋ₓ₎)₃(Al_{1-y}Ga_{y})₅O₁₂:Ln, (Luₓ,Gd₍₁₋ₓ₎)₃(Al_{1-y}Sc_{y})₅O₁₂:Ln, or (Luₓ,Gd₍₁₋ₓ₎)₃(Sc_{1-y}Ga_{y})₅O₁₂:Ln wherein Ln is at least one lanthanide as defined above, and 0≤x≤1 and 0≤y≤1.

Nanoparticles according to the invention include particles of which at least one dimension is at a nanometer scale, preferably ≤ 100 nm, as measured using transmission electron microscopy (TEM), high resolution scanning electron microscopy (HR-SEM), scanning transmission electron microscopy (STEM), or atomic force microscopy (AFM). D₅₀ is defined as the median value of the length of the smallest dimension of the nanoparticles, measured from an ensemble of at least 50 representative particles. Preferably, the nanoparticles have a D₅₀ value of ≤ 10 nm.

The nanoparticles have a D₅₀ value of ≥ 1 nm. Preferably the nanoparticles have a D₅₀ value of ≥ 2 nm.

Preferably, the nanoparticles according to the invention are capable of luminescence.

Preferably, the Ln-doped nanoparticles according to the invention are capable of emitting in the red and/or green spectral range. As used herein, the term red emitting material refers to a material which, upon suitable excitation, has one or more emission bands between 600 nm and 700 nm. As used herein, the term green emitting material refers to a material, which, upon suitable excitation, has one or more emission bands between 510 nm to 560 nm.

### Preparation method

The invention provides a method for preparing luminescent rare-earth doped nanoparticles using a microjet reactor.

The methods according to the invention enable to obtain the nanoparticles according to the invention.

### Stage a) providing a first mixture comprising at least a salt of A, a salt of Ln, and a solvent

A first mixture is provided comprising at least a salt of A, a salt of Ln, and a solvent.

A is one or more of yttrium, scandium, gallium, aluminium, or a lanthanide; Ln is at least one lanthanide; and 0<x<2.

Preferably, the salt of A is selected from the group consisting of halides, acetates, acetylacetonates, sulfates, nitrates, and/or a hydrated form of these substances.

When A comprises yttrium, the yttrium salt is preferably selected from nitrates, acetates or a hydrated form thereof.

When A comprises a lanthanide, the lanthanide salt is preferably selected from acetates or a hydrated form thereof.

Mixtures of yttrium, lutetium, and/or gadolinium salts may be used in some embodiments. Such mixtures can allow to obtain the nanoparticles of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide.

The skilled person is able to determine the relative amounts of the salts such as to obtain the desired ratios of the ions in the nanoparticles. The skilled person is therefore able to determine the amount of A1 (one or more selected from the group of yttrium, lutetium, and gadolinium) to A2 (one or more selected from the group of aluminium, gallium, and scandium) to obtain the desired Al₃A2₅O₁₂:Ln ratios. The skilled person is also able to determine the amount of Ln relative to A1 (one or more selected from the group of yttrium, lutetium, and gadolinium) to obtain the desired doping concentrations. In stoichiometric Al₃A2₅O₁₂:Ln garnets, the ratio of (A1+Ln):(A2) is 3:5.

In an embodiment, a mixture of an yttrium and a lutetium salt is used. This allows to obtain yttrium lutetium aluminium garnet ((Y,Lu)AG)-type nanoparticles.

The skilled person is able to determine the relative amounts of the salts such as to obtain the desired ratios of the ions in the nanoparticles. The skilled person is therefore able to determine the amount of yttrium and/or lutetium relative to the amount of aluminium, to obtain the desired YAG:Ln or LuAG:Ln ratios. The skilled person is also able to determine the amount of rare earth relative to yttrium and/or lutetium to obtain the desired doping concentrations. In stoichiometric aluminium garnets the ratio of (Ln + yttrium + lutetium):A1 is 3:5.

When A is one or more of aluminium, scandium or gallium, the salt is selected from the group consisting of halides, acetates, acetylacetonates, sulfates, nitrates, and/or a hydrated form of these substances.

More preferably, when A comprises aluminium, aluminium nitrate is used.

Preferably, at least some of the aluminium salt is substituted by a gallium salt and/or a scandium salt. This may result in gallium and/or scandium substitution at at least some of the aluminium sites in the garnet-lattice, and can result in a shift of the excitation/emission spectrum. Thus, the substitution of the aluminium salt by a gallium salt and/or scandium salt can be used to tune the excitation/emission spectrum of the product.

Mixtures of aluminium, gallium and/or scandium may be used in some embodiments, which allow to obtain the nanoparticles of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide.

Preferably, the Ln salt is selected from the group consisting of halides, acetates, acetylacetonates, sulfates, nitrates, and/or a hydrated form of these substances. More preferably, the Ln is selected from acetates or a hydrated form thereof.

Preferably, Ln is europium and/or cerium and/or terbium. Ce³⁺ shows, upon suitable excitation, yellow-green emission. Tb³⁺ shows, upon suitable excitation, green emission. Eu³⁺ shows, upon suitable excitation, red emission. More preferably, Ln is a combination of cerium and terbium, or a combination of europium and terbium.

Ln is present as a dopant. Preferably, the doping concentration is between 0.01% and 3% for cerium doped nanoparticles, more preferably the doping concentration is 2.5%. As used herein, the doping concentration is the percentage of doping ions relative to the total of doping ions and yttrium or lutetium atoms in the crystal lattice.

Preferably, in the case of nanoparticles co-doped with both cerium and terbium, the doping concentration of cerium is between about 0.01% and about 2.5%, and the doping concentration of terbium is at least about 30%.

Preferably, the doping concentration is at least 10% for europium doped nanoparticles, more preferably the doping concentration is between 15% and 80%.

Preferably, in the case of nanoparticles co-doped with both europium and terbium, the doping concentration of europium is between about 15% and about 50%, and the doping concentration of terbium is at least about 15%.

Preferably, the Ln salt is present in the mixture such that the desired doping concentration is achieved.

Preferably, the first mixture has a pH such that the metal salts are dissolved in the solvent, and do not precipitate. More preferably, the first mixture has a pH of between 4 and 5.

The first mixture preferably comprises an acid or base. More preferably, the first mixture comprises an acid. The acid can be chosen from HCl or HNO₃. The base can be chosen from NH₃, NaOH, KOH, NH₄HCO₃ or CH₄N₂O.

The mixture comprises a solvent. The solvent is preferably a polar solvent, and more preferably chosen from the group of water or short chain alcohols.

### Stage b) Providing a second mixture comprising a precipitating agent and a solvent

The second mixture comprises a precipitating agent and a solvent.

The precipitating agent is preferably a base. More preferably, the precipitating agent is urea or ammonium hydrogen carbonate.

Preferably, the second mixture comprises the precipitating agent ammonium hydrogen carbonate in a concentration of between 1 M and 2 M.

The second mixture preferably has a pH > 7. The pH can be adjusted using the same base or a different base. Preferably, ammonia (NH₃) is used to adjust the pH.

It has been found that depending on the desired crystal lattice type, the pH of the second mixture can be adjusted.

In a preferred embodiment, the nanoparticles are of the type Y₂O₃:Ln, Sc₂O₃:Ln, Lu₂O₃:Ln,or Gd₂O₃:Ln, and the second mixture has a pH of equal or more than 8.

In a preferred embodiment, the nanoparticles are of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide, and the second mixture has a pH of between 7 and 8.

### Stage c) contacting said first mixture with said second mixture in a microjet reactor process to obtain a third mixture comprising nanoparticles

The first mixture and second mixture are contacted in a microjet reactor process to obtain a third mixture comprising nanoparticles.

The microjet reactor is a device suitable for the production of nanomaterials, and includes all the geometries described in EP 1 165224 B1 and DE 102009008478 A1. Preferably, a microjet reactor of the kind described in EP 1 165224 B1 is used, which is operated without gasses. Mixing in a conventional microreactor engineered, for example, as a T-mixer, leads to substantially longer mixing times because these reactors operate routinely in the laminar range. In order to carry out the method of the invention, the microjet reactor may also be designed such that the liquid jets collide at an angle other than 180° or that the jets are mixed on a shared impinging surface. In these cases, however, the particle size and shape may differ.

The first mixture and second mixture are fed into the microjet reactor. Preferably, the flow rate of both solutions are substantially identical.

Preferably, the first mixture and the second mixture are separately fed into the microjet reactor. This avoids premature precipitation.

Preferably, the microjet reactor has a nozzle size of between 200 and 300 µm. This results in the right impinging velocity and pressure of the jet.

Preferably, the first mixture and the second mixture are fed into the microjet reactor at a pump pressure of about 50 bar. This allows the jets to have the correct flow rate to obtain nanosized particles. The pump pressure may be adjusted to adjust the flow rate.

A third mixture is obtained in stage c. The third mixture comprises precipitated nanoparticles.

The third mixture preferably has a pH of between 6 and 11.

In a preferred embodiment, the nanoparticles are of the type Y₂O₃:Ln, Sc₂O₃:Ln, Lu₂O₃:Ln,or Gd₂O₃:Ln, and the third mixture has a pH of between 7.5 and 11, more preferably between 8 and 10.

In a preferred embodiment, the nanoparticles are of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide, and the third mixture has a pH of between 6 and 9, more preferably between 7 and 7.5.

The pH of the third mixture might be adjusted with any suitable base or acid, for example using a HNO₃ solution in water.

After precipitation the precipitate may be separated by any means known in the art, such as allowing the precipitate to sediment, centrifuging, filtration, etc.

Preferably, the separated precipitate is washed. Washing allows to remove ions. When nitrate salts are used, washing is preferably performed, thereby preventing the formation of explosive ammonium nitrate.

Preferably, the separated precipitate is dried, preferably by means of freeze-drying. This allows to arrive at the desired temperature quicker and in a more controlled manner in stage d).

### Stage d) subjecting said nanoparticles to a heating step

The nanoparticles obtained in stage c are subjected to a heating step.

The heating step allows to crystallize or improve the crystallinity of the precipitate.

Preferably, said heating comprises heating particles having a D₅₀ value of ≥ 1nm, more preferably ≥ 2nm, and a D₅₀ value of ≤ 100 nm, more preferably ≤ 20 nm.

Preferably, said heating comprises heating the nanoparticles at a temperature of 200 °C or more; preferably at least 500 °C, such as between 200 and 1500 °C or 500 and 1600 °C, preferably between 300 and 1200 °C, or between 500 and 1300 °C.

Preferably, said heating is performed for a period of at least 30 seconds, more preferably at least 1 minutes, more preferably from 1.5 minutes to 3 hours.

The heating can be performed for example under air, or under an inert gas like for example N₂ or argon.

In a preferred embodiment, said heating comprises heating a mixture comprising the nanoparticles and a protective matrix. The protective matrix may be a salt. Preferably, the nanoparticles are of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide

Said mixture can be prepared according to WO2021/043762A.

Preferably, said mixture is prepared by
- dry mixing the nanoparticles and the protective matrix; and/or
- mixing the nanoparticles and the protective matrix into a liquid to obtain a dispersion, and preferably separating the liquid from the dispersion; and/or
- preparing an emulsion comprising an disperse phase and a continuous phase, said disperse phase comprising the nanoparticles and the protective matrix, and preferably, demulsifying said emulsion and separating liquid from said demulsified emulsion.

### Luminescent composition

There is further provided a luminescent composition comprising the nanoparticles obtainable by the method of the invention, or the nanoparticles of the invention.

Preferably, the luminescent composition comprises a first luminescent material and a second luminescent material, wherein at least one of said first luminescent material or said second luminescent material comprises the nanoparticles according to the invention or obtainable with the method according to the invention.

Preferably, the luminescent composition comprises a first luminescent material capable of emitting light in a first wavelength range and a second luminescent material being capable of absorbing light in a second wavelength range, and having an emission spectrum which overlaps at least partly with one or more of the excitation bands of said first luminescent material. At least one of said first luminescent material or said second luminescent material comprises the nanoparticles according to the invention or the nanoparticles obtainable with the method according to the invention.

Preferably, the first luminescent material and second luminescent material are so arranged to each other to allow non-radiative energy transfer from the second luminescent material to the first luminescent material.

The first luminescent material is capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material is capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 480 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266, the contents of which are herewith incorporated by reference. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Forster- or Dexter-type energy transfer. The skilled person will realize that - since resonant energy transfer is in first order inversely proportional to inter-ion distance at the power of 6 (in case of Forster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

Preferably, the first luminescent material and/or the second luminescent material comprise luminescent nanoparticles of the type A₂₋ₓO₃:Lnₓ, wherein A is one or more of yttrium, scandium, gallium, aluminium, or a lanthanide; Ln is at least one lanthanide; and 0<x<2. This allows a large interaction surface between the first and second material, which (further) enables non-radiative energy transfer to occur. The luminescent nanoparticles have desirable luminescent properties. Examples of luminescent nanoparticles suitable for the first luminescent material and/or second luminescent material is YAG:Ln nanoparticles, LuAG:Ln nanoparticles, Y₂O₃:Ln nanoparticles, and/or other luminescent nanoparticles obtainable by the method of the invention.

Preferably, the first luminescent material comprises the luminescent nanoparticles of the invention, where Ln is europium, or europium and terbium. These ions have desired absorption/emission characteristics. More preferably, the first luminescent material comprises the nanoparticles of the invention of the type Y₂O₃:Ln, Sc₂O₃:Ln, Lu₂O₃:Ln,or Gd₂O₃:Ln; and/or the first luminescent material comprises the nanoparticles of the invention of the type Al₃A2₅O₁₂:Ln, wherein A1 is one or more selected from the group of yttrium, lutetium, and gadolinium, A2 is one or more selected from the group of aluminium, gallium, and scandium. Even more preferably the first luminescent material comprises Y₂O₃:Ln nanoparticles of the invention, where Ln is europium, or europium and terbium.

Preferably, said second luminescent material comprises the luminescent nanoparticles according to the invention. The luminescent nanoparticles according to the invention are well suited for use in luminescent compositions. More preferably, Ln is cerium, or cerium and terbium. These ions have desired absorption/emission characteristics. More preferably the second luminescent material comprises A1₃A2₅O₁₂:Ln nanoparticles of the invention, wherein A1 is one or more selected from the group of yttrium, lutetium, and gadolinium, A2 is one or more selected from the group of aluminium, gallium, and scandium, and wherein Ln is cerium, or cerium and terbium. Even more preferably, the second luminescent material comprises the nanoparticles of the invention of the type (Lu,Y)₃Al₅O₁₅:Ln, wherein Ln is cerium, or cerium and terbium.

Preferably said first luminescent material and said second luminescent material are in the form of nanoparticles. Suitable nanoparticles include particles of which at least one dimension is at a nanometer scale, preferably ≤ 100 nm. The small size allows smaller distances between the surfaces of the first and second material, which (further) enables inter-particle non-radiative energy transfer to occur. Providing both materials in the form of nanoparticles allows more efficient mixing and even distribution of the particles, which further promotes inter-particle non-radiative energy transfer to occur.

As discussed, the D₅₀ value of the smallest dimension of the nanoparticles is preferably ≥ 1 nm and ≤ 100 nm, more preferably ≥ 1 nm and ≤ 50 nm, most preferably ≥ 2 nm and ≤ 20 nm, as measured using transmission electron microscopy (TEM), high resolution scanning electron microscopy (HR-SEM), scanning transmission electron microscopy (STEM), or atomic force microscopy (AFM). D₅₀ is defined as the median value of the length of the smallest dimension of the nanoparticles, measured from an ensemble of at least 50 representative particles.

In another preferred embodiment, the first luminescent material is provided as a bulk material with the second luminescent material provided on the first luminescent material. In this context the term "bulk" especially means and/or includes greater than nanoscale, for example greater than 100 nm in diameter and including micro-size scales.

The skilled person will understand that the first and second material have to be in close proximity for FRET to occur. The nanoparticles according to the invention might be treated as described in WO2020/053429 and/or WO2021/043762, both of which are hereby incorporated by reference.

### The first luminescent material

As discussed, the second luminescent material may comprise nanoparticles according to the invention.

In a preferred embodiment, the second luminescent material comprises the nanoparticles according to the invention, and the first luminescent material comprises the nanoparticles according to the invention. Preferably, the first luminescent material comprises the luminescent nanoparticles of the invention, where Ln is europium, terbium, or europium and terbium. These ions have desired absorption/emission characteristics. More preferably, the first luminescent material comprises the nanoparticles of the invention of the type Y₂O₃:Ln, Sc₂O₃:Ln, Lu₂O₃:Ln,or Gd₂O₃:Ln; and/or the first luminescent material comprises the nanoparticles of the invention of the type Al₃A2₅O₁₂:Ln, wherein A1 is one or more selected from the group of yttrium, lutetium, and gadolinium, A2 is one or more selected from the group of aluminium, gallium, and scandium. Even more preferably the first luminescent material comprises Y₂O₃:Ln nanoparticles of the invention, where Ln is europium, or europium and terbium, and/or the first luminescent material comprises the nanoparticles of the invention of the type .

In a preferred embodiment, the second luminescent material comprises the nanoparticles according to the invention, and the first luminescent material is preferably as described below.

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

In a preferred embodiment, the first luminescent material comprises a rare-earth doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃Al₅O₁₂:Ce³⁺ (or Eu³⁺ and/or Tb³⁺), BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF₂.GeO₂:Mn⁴⁺, and combinations thereof.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828] or following the method of this invention.

As is known to the skilled person, rare-earth doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu₃Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping concentration of at least about 10%, more preferably having a doping concentration of between about 15% and about 80%. In case Tb³⁺ doping, the first luminescent material may for example have a host lattice doped having a doping concentration of at least about 15%, more preferably between about 30% and about 80% Tb³⁺. In case of Mn⁴⁺ doping, the first luminescent material may for example have a host lattice doped having a doping concentration of about 0.1-30%, most preferably between about 1-10%. In case of Mn²⁺ doping, the first luminescent material may for example have a host lattice doped having a doping concentration of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²⁻ :Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdA₁₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (or Tb³⁺), LaAlO₃:Eu³⁺ (or Tb³⁺), LaB₃O₆:Eu³⁺ (or Tb³⁺), LaBO₃:Eu³⁺ (or Tb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOI:Eu³⁺ (or Tb³⁺), LaP₃O₉:Eu³⁺ (or Tb³⁺), LaPO₄:Eu³⁺ (or Tb³⁺), LaYO₃:Eu³⁺ (or Tb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), Lu₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuBO₃ (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁺ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-sitel):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (or Tb³⁺), Y₃PO₇:Eu³⁺ (or Tb³⁺), Y₄GeO₈:Eu³⁺ (or Tb³⁺), Y₈P₂O₁₇:Eu³⁺ (or Tb³⁺), YAl₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### The second luminescent material

As discussed, the first luminescent material may comprise nanoparticles according to the invention.

In a preferred embodiment, the first luminescent material comprises the nanoparticles according to the invention, and the second luminescent material comprises the nanoparticles of the invention. The luminescent nanoparticles according to the invention are well suited for use in luminescent compositions. More preferably, the second luminescent material comprises the nanoparticles synthesized using the method of the invention, of the type A₂₋ₓO₃:Lnₓ, wherein Ln is cerium, or cerium and terbium. These ions have desired absorption/emission characteristics. More preferably the second luminescent material comprises nanoparticles of the invention of the type Al₃A2₅O₁₂:Ln, wherein A1 is one or more selected from the group of yttrium, lutetium, and gadolinium; A2 is one or more selected from the group of aluminium, gallium, and scandium where Ln is cerium, or cerium and terbium. Even more preferably, the second luminescent material comprises nanoparticles of the invention of the type (Lu,Y)₃Al₅O₁₂:Ln, wherein Ln is cerium, or cerium and terbium.

In a preferred embodiment, the first luminescent material comprises the nanoparticles according to the invention, and the second luminescent material is preferably as described below. More preferably, the first luminescent is luminescent nanoparticles synthesized using the method of the invention, of the type A₂₋ₓO₃:Lnₓ, wherein A is one or more of yttrium, scandium, aluminium, gallium, or a lanthanide; Ln is one or more of cerium, europium, terbium; and 0<x<2, and the second luminescent material is as described below.

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 380 to 580 nm, preferably wherein said second luminescent material has one or more excitation bands in the UV-A (315 to 400 nm), violet (400 to 440 nm), blue (440 to 480 nm) or green (510 to 560 nm) wavelength range, most preferably in the blue (440 to 480 nm) wavelength range. LEDs based on (Al,In,Ga)N provide efficient "pump" light generation in the violet to blue wavelength range (about 400 nm to about 480 nm). Examples of blue-excitable materials are CaAlSiN₃:Eu²⁺, Y₃Al₅O₁₂:Ce³⁺.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In a preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

Preferably, the first material is the luminescent nanoparticles of the invention, of the type A₂₋ₓO₃:Lnₓ, wherein A is one or more of yttrium, scandium, aluminium, gallium, or a lanthanide; Ln is europium; and 0<x<2, and the second material is Y₃Al₅O₁₂ doped with Ce³⁺ or Tb³⁺. More preferably, the Y₃Al₅O₁₂ material is provided as nanoparticles.

In a preferred embodiment, the first material is the luminescent nanoparticles of the invention, of the type A₂₋ₓO₃:Lnₓ, wherein A is one or more of yttrium, scandium, aluminium, gallium, or a lanthanide; Ln is europium and/or terbium, and the second material is luminescent nanoparticles synthesized using the method of the invention, of the type A₂₋ₓO₃:Lnₓ, wherein A is one or more of yttrium, scandium, aluminium, gallium, or a lanthanide; Ln is cerium and/or terbium.

The invention further relates to a light-emitting device comprising the luminescent material obtainable by the method according to the invention. Preferably the light-emitting device further comprises an excitation source for the luminescent material, such as for the second luminescent material. Preferably the excitation sources is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the rare-earth metal doped garnet nanoparticles or luminescent composition according to the inventions deposited on top of the LED chip. The nanoparticles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the nanoparticles synthesized using the method of the invention as a taggant. A taggant is a marker added to materials to allow various forms of testing. The overall excitation/emission spectra of the luminescent materials and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

The invention will now further be illustrated using the following examples, without however being limited thereto.

### EXAMPLES

### Example 1: Synthesis of Y₂O₃:Eu³⁺ nanoplatelets (15%Eu)

### Preparation of the first mixture and the second mixture

First mixture:
- Yttrium acetate (0.2 mol or 0.17 mol for 15 mol-% Eu doping): 38.4 g yttrium oxide was mixed with 1 L water and 100 ml acetic acid (100%) and dissolved at approx. 100-150 °C.
- Europium acetate (0.03 mol): 10.56 g europium oxide was dissolved in 500 ml water and 25 ml acetic acid.

The dissolved europium acetate was added to the yttrium acetate solution and this was made up to 2 L. This corresponded to a 15% doping concentration.

Second mixture:
- Ammonium hydrogen carbonate (AHC)-solution: 316.224 g AHC was dissolved with ammonia (NH₃) in 1 L water and then made up to 2 L. The amount of NH₃ was such that the final pH was 10.

### Contacting via MJR

The first mixture and second mixture were led separately into the microjet reactor. The MJR nozzle size was 200 µm. The pump pressure was 50 bar. The contacting step was performed at room temperature. Nanosized particles were precipitated and a third mixture obtained. The third mixture comprising precipitated particles was centrifuged and freeze-dried.

### Heating

The washed and dried precipitant was then heated according to the following conditions:
- Heating rate: 5 K/min
- Temperature: 600 °C
- Dwell time: 1 h
- Atmosphere: air

### Example 2: Synthesis of YAG:Ce nanoparticles

### Preparation of the first mixture and the second mixture

First mixture:
- Yttrium nitrate(0.3 mol or 0.2955 mol for Ce doping): 33.37 g yttrium oxide was mixed with 0.5 L water and 85.9 g HNO₃ (approx. 55 ml) and dissolved at approx. 150 °C.
- Cerium acetate(0.0045 mol): 1.55 g cerium acetate was dissolved in 100 ml water.

The dissolved cerium acetate was added to the yttrium nitrate solution and this was made up to 1 L. This corresponds to a 1.5% doping concentration based on the Y.
- Aluminium nitrate(0.5 mol): 187.57 g aluminium nitrate was dissolved in 0.5 L water and then filled up to 1 L.

Both solutions were added together to obtain the 2 L metal salt solution.

Second mixture:
- Ammonium hydrogen carbonate (AHC)-solution: 158.12 g AHC was dissolved with 400 ml ammonia (NH3) in 1 L water and then made up to 2 L. The pH was more than 9.

### Contacting via MJR

The first mixture and second mixture were led separately into the microjet reactor. The MJR nozzle size was 200 µm. The pump pressure was 50 bar. The contacting step was performed at room temperature. Nanosized particles were precipitated and a third mixture obtained. The pH value of the precipitated mixture was adjusted to 7-7.5 using an 1 M HNO₃ solution. The third mixture comprising precipitated particles was centrifuged, and washed with demineralised water (15 times). The centrifuged particles were mixed with a K₂SO₄ solution, and then freeze dried.

### Heating

The freeze dried particles were heated according to the following conditions:
- Heating rate: 5 K/min
- Temperature: 950 °C
- Dwell time: 3 h
- Atmosphere: N₂

After heating, the particles were washed with demineralised water to remove the K₂SO₄.

### Example 3: Evidence for energy transfer in LaPO₄:Tb³⁺ + Y₂O₃:Eu³⁺ mixture

A solution of 100 mg NaOH in 5 ml of deionized water was prepared. 100 mg of LaPO₄:50%Tb nanoparticles was added to the solution, and the solution was stirred for 1 hour at room temperature. The sample was centrifuged at 2000 rpm for 10 minutes, and washed twice with deionized water. The treated LaPO₄:Tb particles were dried on a heating plate at 150 °C.

The treated LaPO₄:Tb particles were mixed with 100 mg Y₂O₃:Eu nanoparticles as prepared according to Example 1, and dispersed in 15 mL deionized water. The dispersion was ultrasonicated for 3 hours, and then dried at 105 °C while stirring.

When irradiated with light of 486 nm, wherein only Tb³⁺ is excitable, emission was detected in the 670-720 nm region, wherein only Eu³⁺ emits. There was thus evidence of energy transfer.

### Example 4: Evidence for energy transfer in YAG:Tb³⁺ + Y₂O₃:Eu³⁺ mixture

Y₃Al₅O₁₂:50%Tb was obtained following the procedure of J. Mater. Chem. C, 2017, 5, 12561.

100 mg of YAG:Tb particles were mixed with 100 mg Y₂O₃:Eu nanoparticles as prepared according to Example 1, and dispersed in 15 mL deionized water. The dispersion was ultrasonicated for 3 hours, and then dried at 105 °C while stirring.

When irradiated with light of 486 nm, wherein only Tb³⁺ is excitable, emission was detected in the 670-720 nm region, wherein only Eu³⁺ emits. There was thus evidence of energy transfer.

### Example 4: Evidence for energy transfer in YAG:Ce,Tb + Y₂O₃:Eu³⁺ mixture

Y₃Al₅O₁₂:50%Tb,0.1%Ce was obtained following the procedure of J. Mater. Chem. C, 2017, 5, 12561.

100 mg of YAG:Tb,Ce particles were mixed with 100 mg Y₂O₃:Eu nanoparticles as prepared according to Example 1, and dispersed in 15 mL deionized water. The dispersion was ultrasonicated for 3 hours, and then dried at 105 °C while stirring.

When irradiated with light of 440 nm, wherein only Ce³⁺ is excitable, emission was detected at 530-720 nm, wherein Eu³⁺ and Tb³⁺ emit. There was thus evidence of energy transfer.

## Claims

1. A method of making luminescent nanoparticles of the type A₂₋ₓO₃:Lnₓ, wherein A is one or more of yttrium, scandium, aluminium, gallium, or a lanthanide; Ln is at least one lanthanide; and 0<x<2, said method comprising:
- providing a first mixture comprising at least a salt of A, a salt of Ln, and a solvent,
- providing a second mixture comprising a precipitating agent and a solvent,
- contacting said first mixture with said second mixture in a microjet reactor process to obtain a third mixture comprising nanoparticles, and
- subjecting said nanoparticles to a heating step.

2. The method of claim 1, wherein Ln is chosen from the group consisting of europium, terbium, or cerium, and/or
wherein the nanoparticles are of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide.

3. The method of claim 1 or 2, wherein said first mixture comprises an acid or base, preferably wherein the first mixture has a pH of between 4 and 5.

4. The method of any of the preceding claims, wherein said precipitating agent is a base, preferably wherein the precipitating agent is urea or ammonium hydrogen carbonate.

5. The method of any of the preceding claims, wherein the second mixture has a pH of more than 7.

6. The method of any of the preceding claims, wherein the nanoparticles are of the type Y₂O₃:Ln, Sc₂O₃:Ln, Lu₂O₃:Ln,and/or Gd₂O₃:Ln, and preferably:
- the pH of the second mixture is more than 8, and/or
- the pH of the third mixture is between 7.5 and 11, more preferably between 8 and 10.

7. The method of any of the preceding claims, wherein the nanoparticles are of the type Al₃A2₅O₁₂:Ln, wherein A1 is one or more selected from the group of yttrium, lutetium, and gadolinium; A2 is one or more selected from the group of aluminium, gallium, and scandium; and Ln is at least one lanthanide, and wherein:
- the pH of the second mixture is between 7 and 9, and/or
- the pH of the third mixture is between 6 and 9, preferably between 7 and 7.5.

8. The method of any of the preceding claims, wherein the microjet reactor has a nozzle size of between 200 and 300 µm, and/or wherein the first mixture and the second mixture are separately fed into the microjet reactor, preferably wherein the first mixture and the second mixture are fed into the microjet reactor at a pump pressure of about 50 bar.

9. The method of any of the preceding claims, wherein said heating comprises:
- heating particles having a D₅₀ value of ≥ 1nm, more preferably ≥ 2nm, and a D₅₀ value of ≤ 100 nm, more preferably and ≤ 20 nm,
- heating the nanoparticles at a temperature of 200 °C or more; preferably at least 500 °C, such as between 200 and 1500 °C or 500 and 1600 °C, preferably between 300 and 1200 °C, or between 500 and 1300 °C, preferably for a period of at least 30 seconds, more preferably at least 1 minutes, more preferably from 1.5 minutes to 3 hours.

10. The method of any of the preceding claims, wherein said heating comprises heating a mixture comprising the nanoparticles and a protective matrix, and preferably:
- wherein the protective matrix is a salt, and/or
- said mixture is prepared by:
• dry mixing the nanoparticles and the protective matrix;
• mixing the nanoparticles and the salt into a liquid to obtain a dispersion, and preferably separating the liquid from the dispersion; and/or
• preparing an emulsion comprising a disperse phase and a continuous phase, said disperse phase comprising the nanoparticles and the protective matrix, and preferably, demulsifying said emulsion and separating liquid from said demulsified emulsion.

11. Nanoparticles obtainable by the method of any of the preceding claims, preferably wherein:
- the Ln comprises an ion chosen from the group of Tb³⁺, Eu³⁺ and Ce³⁺, and/or
- the nanoparticles comprise active ions disposed in a host lattice, wherein the host lattice is more preferably chosen from the group of garnets and metal oxides, even more preferably wherein the host lattice is of the type A1₃A2₅O₁₂, wherein A1 is one or more selected from the group of yttrium, lutetium, and gadolinium; A2 is one or more selected from the group of aluminium, gallium, and scandium and/or wherein the host lattice is chosen from Y₃Al₅O₁₂, Lu₃Al₅O₁₂ or Y₂O₃.

12. Luminescent composition comprising the nanoparticles according to claim 11.

13. The luminescent composition according to claim 12, wherein said luminescent composition comprises a first luminescent material and a second luminescent material, wherein said first luminescent material and said second luminescent material are selected such that said second luminescent material has an emission spectrum which overlaps at least partly with one or more of excitation bands of the first luminescent material, and wherein said first luminescent material and/or said second luminescent material comprises the nanoparticles according to claim 11.

14. Light-emitting device, said light emitting device comprising the nanoparticles according to claim 11, or the luminescent composition according to any one of claims 12-13, preferably wherein light-emitting device further comprises an excitation source.

15. A lighting system comprising a light emitting device according to claim 14, preferably, wherein the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems and anti-counterfeiting.
